# EUROPEAN PATENT APPLICATION

(11) **EP 1 475 762 A1**
(43) Date of publication of application: **10.11.2004**
(21) Application number: 03010419.4
(22) Date of filing: 08.05.2003
(51) Int. Cl.: G08G 1/0968, G01C 21/26

(54) **Service provision to a vehicle entertainment and information device**

(71) Applicant: Harman/Becker Automotive Systems GmbH, 76303 Karlsbad (DE)
(72) Inventor: Behrens, Ralph, 31174 Schellerten (DE); Kuz, Volker, 38106 Braunschweig (DE)
(74) Representative: Grünecker, Kinkeldey, Stockmair & Schwanhäusser Anwaltssozietät

(57) **Abstract**

This invention relates to a method in a vehicle entertainment and information processing device for providing services to a user. This invention further relates to a system comprising the vehicle entertainment and information processing device, at least one storage medium accessible by the device and at least one service provider accessible by the device via a wireless data link, to the device and to a data structure used on the storage medium. To provide a platform that enables dynamic service provision this invention detects a storage medium accessible by the device, detects services provided by the medium and a service provider, generates and displays a list of services available at the storage medium and the service provider and provides a user-selected service wherein service data are read from the storage medium and/or is transferred from the at least one service provider.

## Description

### Field of the Invention

This invention relates to a method in a vehicle entertainment and information processing device for providing services to a user of the device. Further this invention relates to a system comprising a vehicle entertainment and information processing device, at least one storage medium accessible by the entertainment and information processing device and at least one service provider accessible by the entertainment and information processing device via a wireless data link and to the vehicle entertainment and information processing device itself. Finally, this invention provides a data structure on the storage medium for use in the above mentioned system.

### Related Art

In the near future, networked vehicles will be an essential participants in smart, wireless networks and vehicle manufacturers started to integrate wireless-based telematics services in their vehicles. The term telematics refers to the emerging market for in-vehicle communications that combines wireless voice and data transfer with GPS positioning technology to provide location-based connectivity, security, information enhanced productivity, and entertainment services. Telematics capitalizes on the emergence and proliferation of sophisticated broadband wireless communications technology and e-commerce. In recent years, many smaller companies have been founded, which provide ancillary services as local, real-time traffic/routing information, location-based services, mapping software and speech recognition technology, among other services.

However, developers and marketing plans are years ahead of their implementation. To this day, common standards, platforms and protocols are absent. There has been a major push for establishing common technology standards and protocols throughout the internet and telecommunications industry. Companies worry that they would have to set up multiple, independent, redundant systems to carry out similar tasks with various suppliers and customers. In addition, they are concerned that the technology that they purchase today will become obsolete tomorrow, rendering their investments worthless. Consumers are no different than companies in this regard.

### Summary of the Invention

Therefore, there is a need to provide a platform that enables dynamic service provision. It is a furthermore desirable to dynamically detect and provide services to the user of a vehicle entertainment and information processing device from various sources, such as different storage media and service providers.

This invention provides a method in a vehicle entertainment and information processing device for providing services to a user of the entertainment and information processing device. The method detects at least one readable and writable storage medium accessible by the entertainment and information processing device, detects services provided by the at least one storage medium, detects services provided by at least one a service provider via a wireless data channel, generates a list of services available at the at least one storage medium and the at least one service provider, displays the list of available services to the user using a browser interface, wherein the browser interface allows a selection of services available from the at least one storage medium and the service provider, selects a service from the list of available services and provides the selected service to the user, wherein providing the selected service comprises reading service data from the at least one storage medium and/or transferring the service data from the at least one service provider.

For effectively detecting services provided by the at least one storage medium the method may further comprise reading and evaluating service identification data stored on each of the storage media indicating the services available from the at least one storage medium.

Moreover, the service identification data may be in a data format allowing to determine executable code modules stored on the storage medium for providing a service and/or for determining service data stored on the storage medium for providing a service.

Further, the method comprises storing the service data transferred from the at least one service provider on at least one storage medium accessible by the entertainment and information processing device to be able to reuse the service data.

Before generating the service list, it may be of advantage to check if the user is authorized to use the service.

According to a further aspect, this invention allow the user to change the subscription status of available services. When changing the subscription status it may be possible to enable and/or disable one or more services.

E.g. when locally stored data on the storage media are out of date, this invention further allows to update the service data stored on the at least one storage medium by transferring update information from the at least one service provider to the entertainment and information processing device and to store the update information on the at least one storage medium. Alternatively, the service identification data may be updated upon updating the service data.

Another aspect of this invention is to more closely specifies the detection of services provided by at least one a service provider. According to this aspect service provision comprises opening a connection to the at least one service provider using the wireless data channel, performing an authentication and/or authorization process at the at least one service provider to authenticate the user and/or authorize service access to the user, and transferring service information for the services available from the at least one service provider to the user, in case the user has been authenticated and/or has authorization to use the service.

The authentication process may thereby be performed based on an unique identifier identifying the user and the authorization process may be performed based on the subscription status of the user for the available services.

The services that may be provided to the user comprise at least one of the following services: navigation, time synchronization, configuration of automated WAP-calls, messaging, configuration data update, text-to-speech, audio track information and reproduction, play list generation, point of interest, firmware update, address book management, date book management, subscription status management, administration services of the at least one storage medium, and scripting services.

More specifically the messaging service may comprise an email service, a SMS service and/or an instant messaging service as exemplary solutions for messaging services.

Advantageously, the wireless data link is a GSM (WAP), GPRS (WAP, WWW), Bluetooth or WAN link. The storage medium may be a multimedia card, a persistent memory, such as a hard disk or a programmable memory or a re-writable compact disk.

Moreover this invention provides a system comprising a vehicle entertainment and information processing device, at least one storage medium accessible by the entertainment and information processing device and at least one service provider accessible by the entertainment and information processing device via a wireless data link, wherein the vehicle entertainment and information processing device, the at least one storage medium and the at least one service provider are adapted to perform the inventive method described above.

Another aspect of this invention provides a vehicle entertainment and information processing device in a system comprising the vehicle entertainment and information processing device, at least one storage medium accessible by the entertainment and information processing device and at least one service provider accessible by the entertainment and information processing device via a wireless data link.

According to this aspect, the device comprises service detection means for detecting at least one readable and writable storage medium accessible by the entertainment and information processing device, for detecting services provided by the at least one storage medium, and for detecting services provided by at least one a service provider via a wireless data channel, processing means for generating a list of services available at the at least one storage medium and the at least one service provider, and for providing the selected service to the user, wherein the processing means are adapted to read service data from the at least one storage medium and/or to transfer the service data from the at least one service provider, a display for displaying the list of available services to the user using a browser interface, wherein the browser interface allows a selection of services available from the at least one storage medium and the service provider, and input means for enabling the user to select a service from the list of available services.

The vehicle entertainment and information processing device may further comprise means for performing the method in its different aspects described above.

According to a further aspect of this invention, the vehicle entertainment and information processing device comprises a radio module for establishing the wireless data link to the at least one service provider.

To be able to advantageously detect services available on the storage media, this invention further relates to a data structure on a storage medium for use in a system comprising a vehicle entertainment and information processing device, at least one storage medium accessible by the entertainment and information processing device and at least one service provider accessible by the entertainment and information processing device via a wireless data link. Thereby the data structure comprises at least one executable code module, service data for providing at least one service, and service identification data, wherein the service identification data enables the vehicle entertainment and information processing device to determine the at least one executable code module stored on the storage medium for providing a service and/or to determine service data stored on the storage medium for providing a service when reading the service identification data.

It may be of advantage to implement the service information data and/or the service data in an markup language format or proprietary format. A markup language that my be used could be XML, WML, HTML.

### Brief Description of the Figures

In the following, this invention will be described in more detail in reference to the attached figures and drawings. Similar or corresponding details in the figures are marked with the same reference numerals.
- **Figure 1**: shows a vehicle entertainment and information processing system according to this invention.
- **Figure 2**: shows a flowchart illustrating the provision of services to the user of an entertainment and information processing device according to this invention.
- **Figure 3**: shows a flowchart illustrating the provision of services to the user of an entertainment and information processing device according to an alternative solution of this invention.
- **Figure 4**: shows a flowchart illustrating the service provision in a entertainment and information processing device.
- **Figure 5**: shows a flowchart illustrating the service detection at the service provider.
- **Figure 6**: shows a flowchart illustrating the service detection on storage media.

### Detailed Description of the Invention

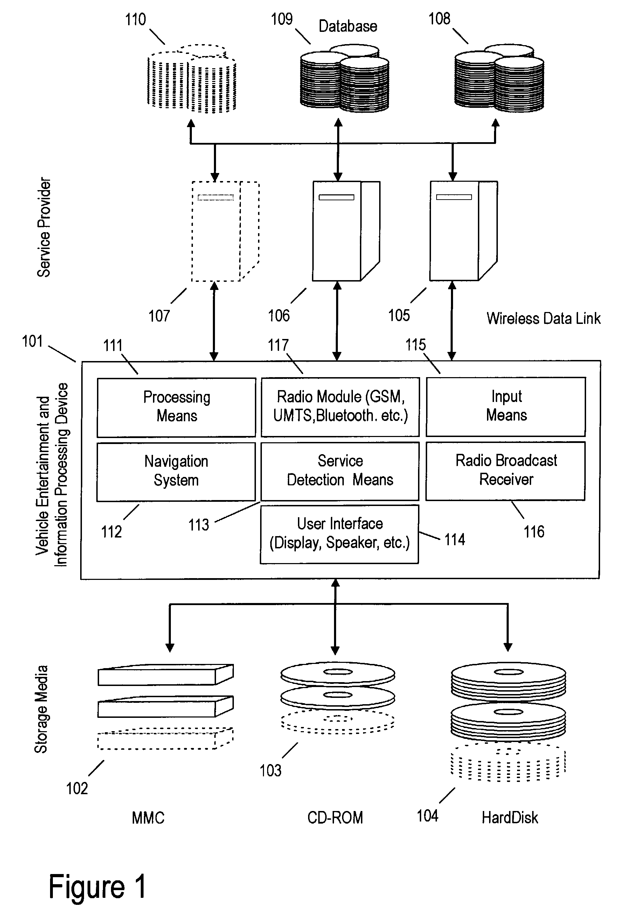

Fig. 1 shows a possible implementation of a vehicle entertainment and information processing system according to this invention. The system comprises mainly three main components, the vehicle entertainment and information processing device 101 (device 101), several storage media as multimedia cards 102 (MMC), CD ROMs 103, for example for storing navigation data and persistent memory capacity as hard disks 104. Other examples for storage media may be memory sticks, ROMs or any programmable persistent memory.

The service providers 105, 106, 107 are connected to the vehicle entertainment information processing device 101 via one or more wireless links. It is also possible to establish a wired connection between the device 101 and a service provider 105, 106, 107. The service providers 105, 106, 107 may be connected to one more data bases 108, 109 and 110. This invention is not limited to the usage of one service provider 105, 106, 107 one storage medium 102, 103, 104 or the like. In fact one or many different types of storage media 102, 103, 104 or service providers 105, 106, 107 may be used simultaneously.

A service provider 105, 106, 107 in the context of this invention may be a service provider for location based services, navigation services, etc., any web server or a personal computer (PC). For example, the PC may be connected via a wireless or wired link to the vehicle comprising the entertainment and information processing device 101. In this scenario it would be possible, that the device 101 communicates with the PC to, for example, synchronize the user's calendar, address book, etc. stored on a storage medium 102, 103, 104 with a version stored on the PC.

The vehicle entertainment and information processing device 101 may comprise input means 115 for receiving user input and for interacting with the user of the device 101 in conjunction with user interface 114. The user interface 114 may be a display, speakers, etc. or combinations thereof.

Further, the device 101 may comprise a radio broadcast receiver 116 for receiving radio broadcast channels and for outputting their content to the user. The radio broadcast receiver 116 may further receive and process traffic and travel information (TTI) and RDS data services and may be connected to a navigation system 112 for sharing of the received data with the navigation system 112.

The navigation system 112 may be a further part of vehicle entertainment and information processing device 101 and may provide its navigation services based on navigation data stored on one or more storage media 102, 103, 104 (i.e. on-board navigation) or remotely at a database 108, 109 and 110 to which one or more service providers 105, 106, 107 are connected (i.e. off-board navigation).

In order to dynamically provide a broad variety of different services to the user, the device 101 may further comprise a service detection means 113, which detects the different services available from the storage media 102, 103, 104 and the service providers 105, 106, 107. Reverting to on-board navigation and off-board navigation, it may be also possible to combine these functionalities, or even to supplement related services by sharing, updating and/or providing service data and/or service code modules independent of whether the related services are provided on-board or off-board.

A service code module may be any executable program, a script, etc. that provides a selected service to the user. Service data in the context of this invention may be all data necessary to provide a service to the user. Taking navigation services as an example, pieces of service data may be a geographic location or coordinates (e.g. longitude and latitude), the name of a point of interest or a hotel, their address, information on prices of hotels, motels, bars or restaurants, information to display a street map to the user, etc.

To communicate with the service provider 105, 106, 107 via the at least one wireless data link, the vehicle entertainment and information processing device 101 may further comprise a radio module 117 to establish the connection to the at least one service provider 105, 106, 107. The radio module 117 may thereby support one or a plurality of wireless communication standards, such as GSM, UMTS, Bluetooth, WLAN, DECT or I-95.

Further, the device 101 may comprise a processing means 111 for providing available services from the variety of sources, i.e. the at least one service provider 105, 106, 107 and the storage media 102, 103, 104. Alternatively, processing may be distributed to other means within the vehicle that provide processing capabilities.

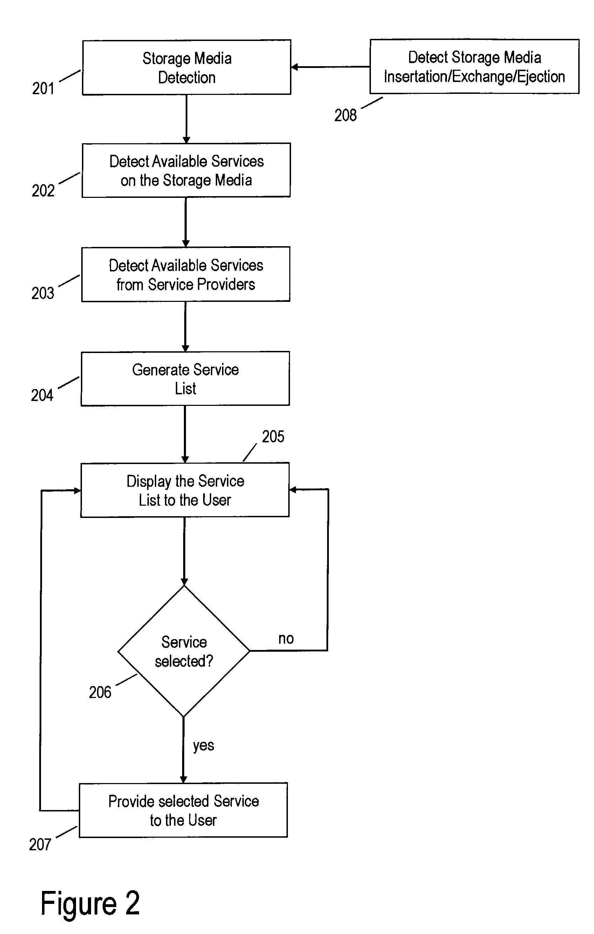

Fig. 2 shows a exemplary flowchart for realizing service provision to the user of the entertainment and processing device 101. Upon being triggered by an insertion, exchange or ejection of a storage medium 208, the device 101 detects the available storage media 102, 103, 104 (see block 201). Thereby the storage media 102, 103, 104 may be inserted into the vehicle entertainment and processing device 101, for example, when provided as a multimedia card 102 (MMC) or a CD ROM 103 or may be integrated as a persistent memory into the device 101, for example, in the form of hard disk 104 or EEPROM. It is also possible to connect external devices, such as a portable CD player, Personal Digital Assistant (PDA) or a notebook to the device 101.

Having detected the storage media 102, 103, 104 accessible by the device 101, the device 101 may detect the available services provided by each of the storage media 102, 103, 104 in step 202. Next, the vehicle entertainment and information processing device 101 may detect the available services from the at least one service provider 105, 106, 107 (block 203). The service detection in blocks 202 and 203 in Fig. 2 will be described in more detail further down below.

The order in which the service detection is performed is irrelevant. It is of importance to notice that the services that may be provided locally, i.e. by the storage media 102, 103, 104 may be preferred and selected for service provision in case the service provider 105, 106, 107 offers a corresponding service. This invention may further allow to supplement service provided locally by service data downloaded from the service provider 105, 106, 107. It is also possible to update or download new service code modules to supplement locally available services, e.g. the used service code module/s, during service provision.

An example for supplementing a local service is playing back CDs or DVDs inserted into a player connected to or comprised by the entertainment and information processing device 101. Having inserted a CD into the player, the device 101 may connect to a service provider 105, 106, 107 to fetch song names, album title and/or information about the artist from a CD database (CDDB). The service provider 105, 106, 107 returns the necessary information to the device 101, which can then display the song titles, artist name, etc. in the display of the user interface 114.

The entertainment and information processing device 101 may further store the retrieved information in an appropriate format on a storage medium 102, 103, 104, such that the information will be locally available and can be reused the next time the user inserts the CD into the CD player. An example for storing these information is shown in the following:

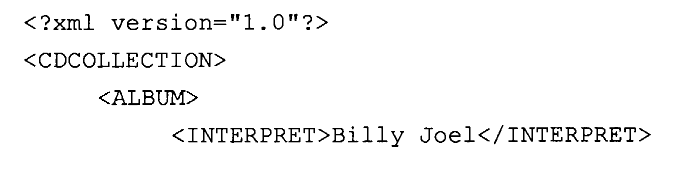

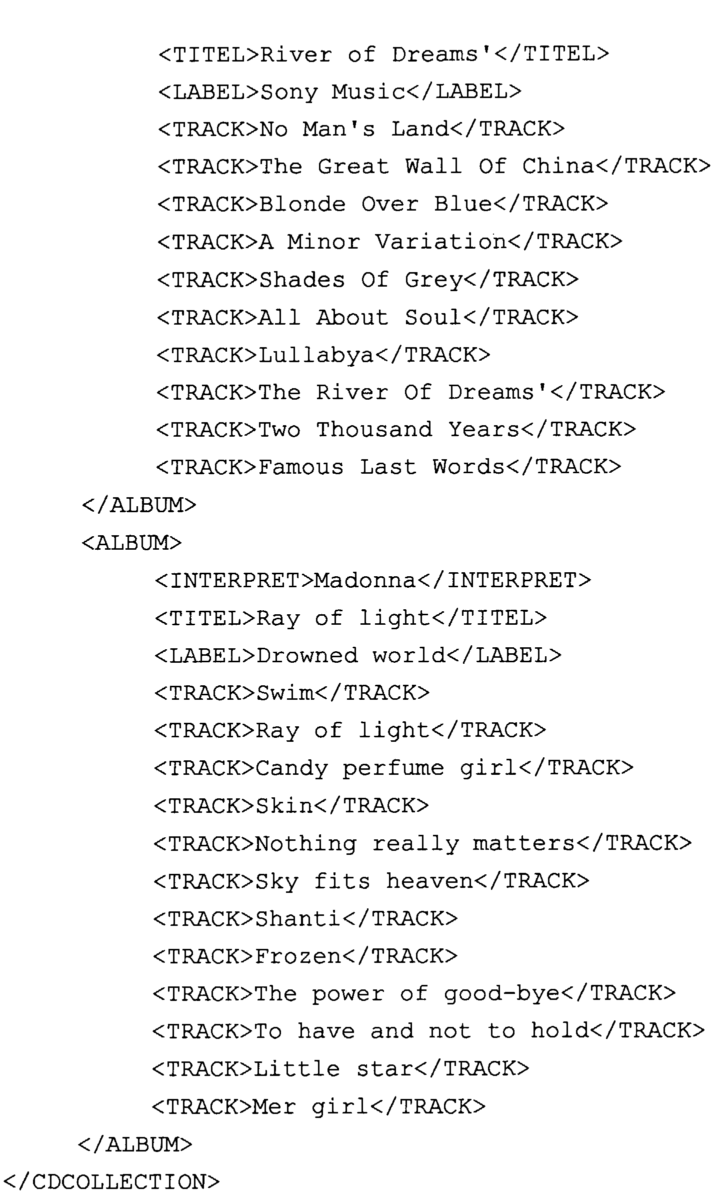

A possible storage format is XML. The <CDCOLLECTION></CDCOLLECTION> tags indicate that in between the opening and closing tag, album information are provided. Each album for which information is stored locally is indicated by the <ALBUM></ALBUM> tag. For each album the album's interpreter (<INTERPRET></INTERPRET>), the album's title (<TITEL></TITEL>), the label (<LABEL></LABEL>) and the different tracks on the album (<TRACK></TRACK>) are identified.

Proceeding to step 204, the device 101 generates a list of services that are available from the storage media 102, 103, 104 and the service providers 105, 106, 107, using the processing means 111. The list may be displayed to the user employing user interface 114. The vehicle entertainment and information processing device 101 may use a display to provide a browser interface to the user. The browser interface provides the generated service list to the user in a way that allows the user to select the desired service from the list (see block 205).

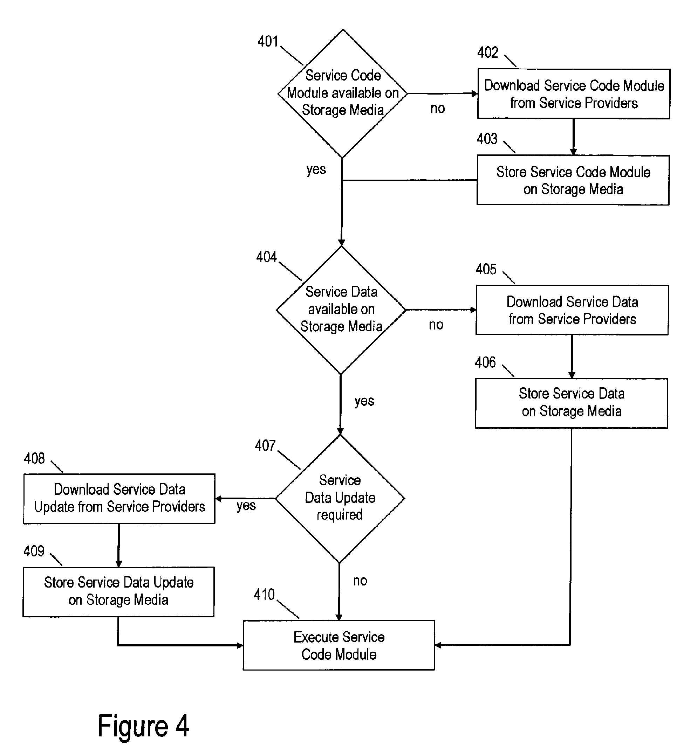

Upon selecting a service (see decision block 206), the vehicle entertainment and processing device 101 provides the selected service to the user in step 207. The provision of the selected service will be explained in more detail further down below (see Fig. 4). Having finished service provision, the device 101 may return to block 205 and await new user interaction, e.g. the selection of another service.

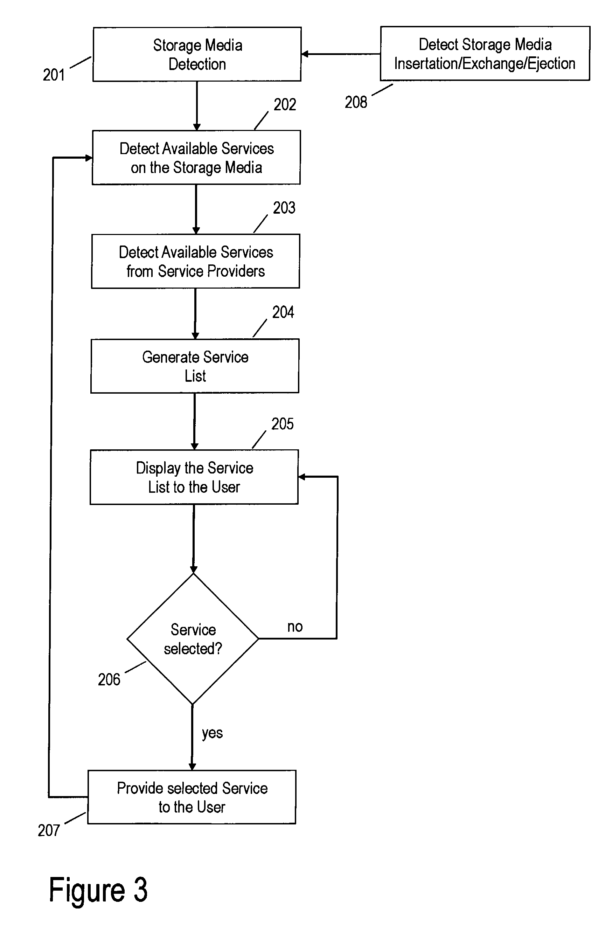

The flowchart of Fig. 3 corresponds in great part to the flowchart shown in Fig. 2. The difference between these two figures is that after the provision of the service to the user in step 207, the device 101 may return to block 202, in which it detects the available services from the storage media 102, 103, 104 that may be provided to the user. By returning to block 202 or alternatively to block 201, the vehicle entertainment and information processing device 101 is capable of constantly updating the service list generated in block 204. Hence, the device 101 is capable of displaying a service list being up to date to the user in block 205.

Next, the service provision of block 207 in Fig. 2 and Fig 3 is illustrated referring to Fig. 4. Upon service selection by the user in block 207 of Fig. 2 and Fig. 3, the vehicle entertainment and information processing device 101 determines whether the service code module that is needed to provide the requested service or functionality to the user is available on one of the storage media 102, 103, 104. In case the selected service is not available locally, the device 101 may establish a connection to one of the service providers 105, 106, 107 using radio module 117. According to an alternative approach of this invention, the entertainment and information processing device 101 maintains a permanent connection to the at least one service provider 105, 106, 107, such that a connection setup is not necessary.

After establishing the connection (or using a permanent connection), the vehicle entertainment and information processing device 101 downloads the necessary service code module/s from the service provider 105, 106, 107 for execution (block 402).

Reverting to the case in which a PC is connected to the device 101, the PC may be used to download service data and/or service code modules from a service provider 105, 106, 107, for example, via the Internet to a multimedia card 102 (MMC). The downloaded information may be used by the device 101 the next time the user inserts the MMC 102 with the new service data and/or service code modules into the entertainment and information processing device 101. MMCs 102 may be also used for synchronization of their content with respective versions thereof on the PC.

In Fig. 4, the flowchart advances from block 402 to 403, in which the downloaded service code module is locally stored on one or more storage media 102, 103, 104 for a possible reuse. Once the service code module has been stored locally, the device 101 does not need to download the service code module the next time the service is requested. Therefore, this invention allows to significantly release the vehicle entertainment and information processing device 101 from time-consuming and cost-extensive data transmission from the service providers 105, 106, 107 to the device 101 for service delivery. An alternative solution for service provision as shown in Fig. 4 would be that the device 101 jumps from block 402 to decision block 404 directly without storing the downloaded service code modules locally.

Next, device 101 checks whether the necessary service data for providing the requested service is available on the storage media 102, 103, 104 or whether it has to be downloaded from one of the service providers 105, 106, 107 (see decision block 404).

For example, using a navigation service a download of service data may be necessary, if the desired destination of a journey is not within the set of service data locally stored on one of the storage media 102, 103, 104.

In case the service data has to be downloaded, the data download is initiated in block 405. After successfully downloading the service data from the service providers 105, 106, 107, the data may be locally stored on one of the storage media 102, 103, 104 (see block 406). This allows to reuse the service data without downloading them again via the wireless data link.

Advancing from decision block 404 to decision block 407, the device 101 checks whether the locally available service data are up to date. For instance, this check may be of advantage, for example, if new navigation data updating the locally existing navigation data are provided by one of the service providers 105, 106, 107 for download. This update check could also be ignored in an alternative solution of the invention.

In case a service data update is required, the flow advances to block 408 or in the service data update is downloaded from the service provider 105, 106, 107. Again, the update information may be stored on a storage medium, such as a multimedia card 102, as a rewritable CD ROM 103 or an integrated persistent memory, such as a hard disk 104 (see block 409). Finally, the flow advances to block 410 executing the service module employing the service data to provide the selected service to the user.

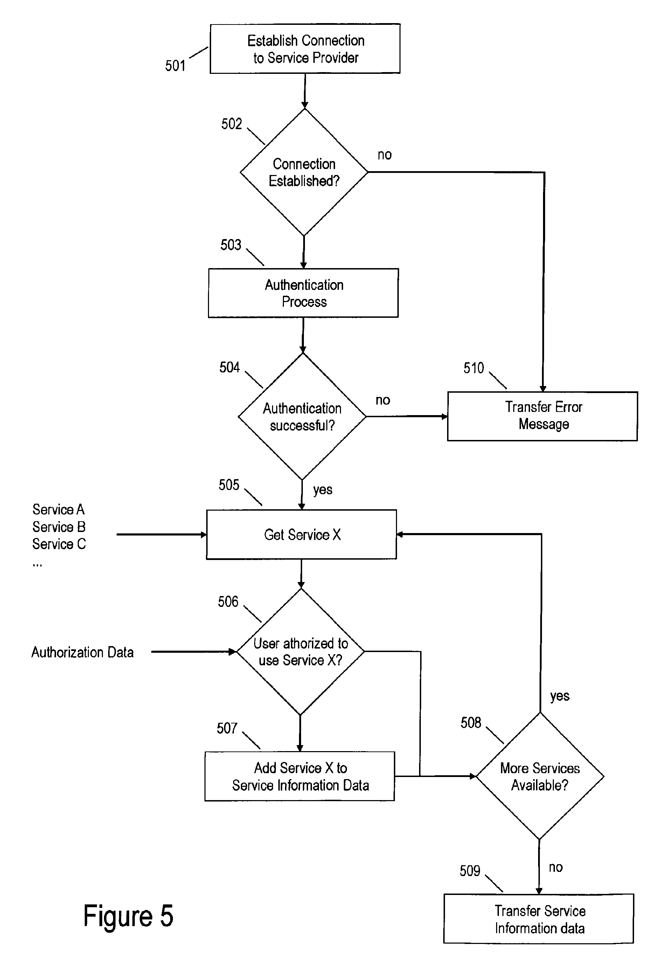

Fig. 5 shows the service detection performed by the vehicle entertainment and information device 101 in step 203 of Fig. 2 and Fig. 3. The device 101 requests service information data that indicate the services available from the service providers 105, 106, 107. First, in block 501, the device 101 establishes a connection with the service provider 105, 106, 107. In case the connection has been established successfully (decision block 502), the flow proceeds to block 503, wherein an authentication process is performed. It is also possible that the device 101 maintains a permanent connection to the at least one service provider 105, 106, 107 as has been discussed above.

To authenticate the user at the service provider 105, 106, 107, the vehicle entertainment and information processing device 101 may request the user to input authentication data using the input means 115 and transmit the authentication data via the wireless data link to the service provider 105, 106, 107 (see decision block 504)s. The authentication process may be "automated" by the device 101, i.e. automatically sending authentication data to the service provider 105, 106, 107 without user interaction.

Authentication data may be any identifier that identifies the user or the vehicle entertainment and information and processing device 101 uniquely. Further, a password to access services and the service provider 105, 106, 107 may be provided. The communication and the authentication processes may be performed using a data encryption to securely transmit the necessary information between device 101 and service provider 105, 106, 107. Access to an individual or a set of services may require the user to enter additional login and/or password information.

In case the authentication has been successful (block 505), the service provider generates the service information data that will be transmitted to the vehicle entertainment and information processing device 101 to create the service list (see block 204 in Fig. 2 and Fig. 3).

In order to provide the service information data, the service provider 105, 106, 107 checks the authorization of the user to access the available services. In case the user is authorized to use a service (decision block 506). The respective service information are added to the service information data.

Authorization may be performed on a per available service basis as depicted in Fig. 5 in blocks 505 to 508. Once all services available to the user have been determined, i.e. the services that the user is authorized to access, the flow advances from decision block 508 to block 509, in which the service provider 105, 106, 107 transfers a complete set of service information data to the vehicle entertainment and information processing device 101.

In case establishing a connection to the at least one service provider 105, 106, 107 (see decision block 502) or the authentication process is not successful (see decision block 504) an error message is transferred back to the device 101 in block 510. It is then up to the device 101 to properly react upon receiving an error message. In case the error message has been sent due to an authentication failure, the device 101 may request the user to enter his authentication information again and may retry to detect the services provided as described above.

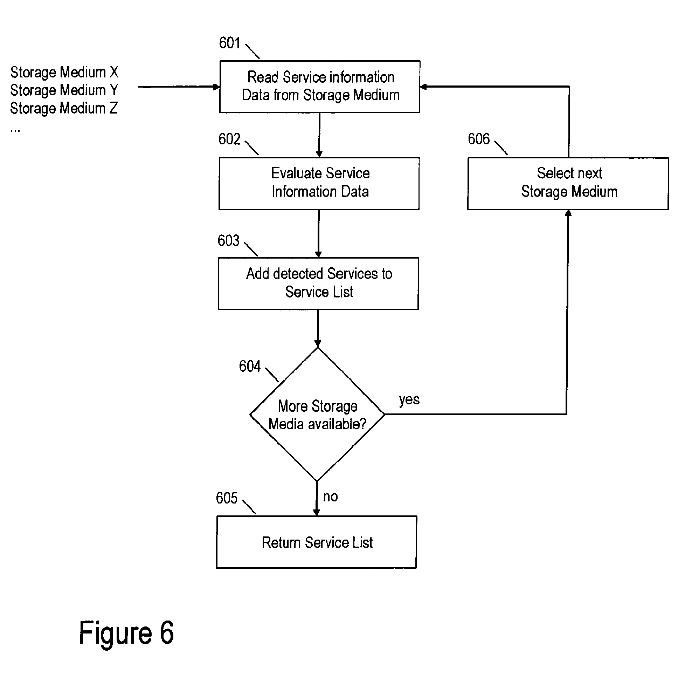

Fig. 6 shows the detection of services available from the at least one storage medium 102, 103, 104 as depicted in step 202 of Fig. 2 and Fig. 3. To determine the available services on a storage medium 102, 103, 104 the vehicle entertainment and information processing device 101 reads the service information data from each of the available storage media 102, 103, 104. The service information data are evaluated in step 602, i.e. information, such as the name and location of the service code module and the necessary service data are determined from the service information data read. The device 101 may then add the detected services and the extracted information on service code module and service data to a service list (block 603).

In decision block 604, the device 101 checks whether more storage media 102, 103, 104 are available and if so, the next storage medium is selected (block 606) and service detection is performed for this medium 102, 103, 104. Finally, the generated service list is returned to the device 101 in block 605.

To detect the available services from the storage media 102, 103, 104 each storage medium 102, 103, 104 may comprises a file storing service information data, which indicate the available services on the respective storage medium 102, 103, 104. The storage media 102, 103, 104 each store service code modules and/or service data, as well as the service information data. The service code modules are executable code modules that are used to provide services to the user. One or more of these modules may be used to provide a service.

The service information may be stored in the file in a proprietary format or using a markup language such as HTML, XML or WML or deductions thereof. The file comprising the service information data may be stored in the root directory of the storage medium 102, 103, 104. Other predefined locations on the medium or a plurality of these files may be stored on the storage medium 102, 103, 104 for service detection.

An example for the data format in which the service information data are stored is shown in the following:

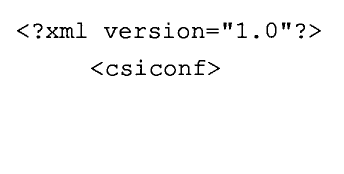

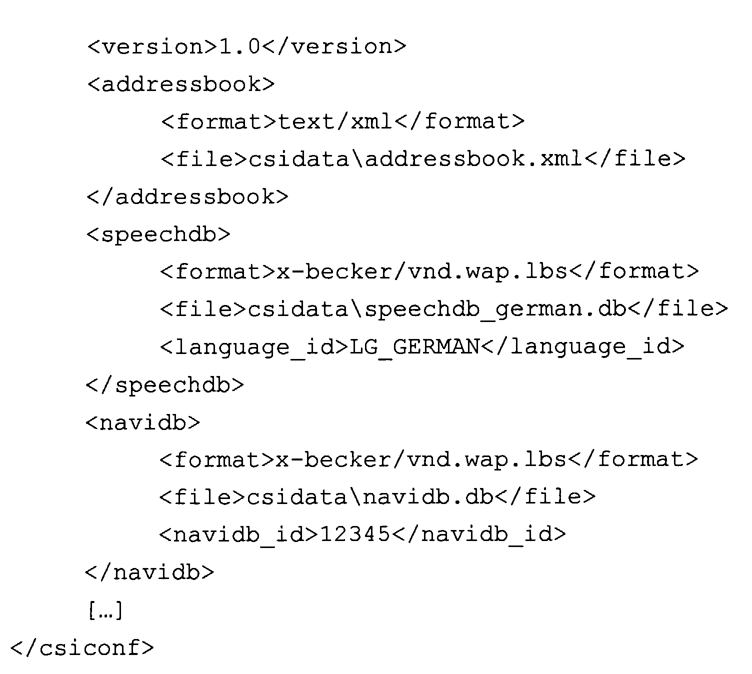

In the example above, the tag <?xml version="1. 0"?> identifies the file format as XML. Further the <csiconf></csiconf> block indicates the part of the file comprising the service information data. As different versions with different data formats may exist and be employed by the entertainment and information processing devices 101, the <csiconf></csiconf> block comprises a <version></version> tag identifying the version of the used tag definitions.

In the example, the service information data identify three different types of services, i.e. service data available, namely the user's address book in the <addressbook></addressbook> block, navigation data in a navigation database in the block and finally a speech database for providing text-to-speech services in the <speechdb></speechdb> block.

Each block identifying a service or available service data comprises a format tag <format></format> identifying the content format or MIME type of the file on the storage medium 102, 103, 104 containing the data and being identified by the file tag <file></file>.

To realize the usage of a plurality of navigation databases the service information data block identifying a navigation database (<navidb></navidb>) comprises a <navidb_id></navidb_id> tag that provides an identification of the respective database. Comparable to this mechanism, the speech database (<speechdb> </speechdb>) uses a <languagey_id></language_id> tag to identify the language of the respective speech database.

This invention may allow to update or use a navigation database and the executable code module providing the navigation system's 112 functionality without depending on the actual source of the navigation or service data or the service code module, which may be stored locally at the entertainment and information processing device 101. This invention may further allow to access navigation databases for other countries than included in standard delivery.

If, for example, a traveling route is calculated and the destination of the route or parts thereof are not within the "standard"-navigation database locally available at the device 101, e.g. not stored on a storage medium 102, 103, 104, other available storage media, such as a multimedia card 102 (MMC) are searched for the possible routes to the destination. If these other available storage media 102, 103, 104 do not contain the required information, same may be requested from the at least one service provider 105, 106, 107 and same are locally stored at a storage medium 102, 103, 104 for reuse after transmission.

Hence, the user of the entertainment and information processing device may not notice that an supplementation of the "standard" functionality or the "standard" navigation data, in this example the service data, is performed by the entertainment and information processing device 101.

Taking a speech database information as an example, this invention may allow to provide an extension of the text-to-speech functionality, by supplementing speech data available in standard delivery in a similar way as described relation to navigation data and to the service code module for providing navigation functionality.

To update a navigation database or a speech database in the entertainment and information processing device 101, an update service may be used providing special packets comprising the data update.

Referring to the example for providing the service information in a special data format, as described above, the address book management is now considered in more detail. The address book may be capable of storing contact information as well as additional information as known from office or mailing applications. The address book data may thereby be stored at a storage medium 1102, 103, 104 of the device 101 in a proprietary format or using a markup language such as XML.

Using an XML format tags identifying first name, surname, position in a company, the company itself, business, private and mobile telephone numbers, the address with street, house number, city, zip code and country, coordinates according to the World Geodetic System 1984 (WGS84), email address, an associated URL, a display format of the address book entry's information and additional information fields may be defined. Some of these parameters may thereby be defined as mandatory parameters which have to be entered for every entry to the address book.

It is further noted that this invention may provide a broad variety of services or functionality to the user of the device 101. Other usage scenarios may be configuration data or firmware updates of the entertainment and information processing device 101, time synchronization of a clock in device 101 with a clock pulse delivering entity, data book management, or administration services of the device 101.

## Claims

1. A method in a vehicle entertainment and information processing device for providing services to a user of the entertainment and information processing device, comprising the steps of:
detecting at least one readable and writable storage medium accessible by the entertainment and information processing device,
detecting services provided by the at least one storage medium,
detecting services provided by at least one a service provider via a wireless data channel,
generating a list of services available at the at least one storage medium and the at least one service provider,
displaying the list of available services to the user using a browser interface,
wherein the browser interface allows a selection of services available from the at least one storage medium and the service provider,
selecting a service from the list of available services and
providing the selected service to the user,
wherein providing the selected service comprises reading service data from the at least one storage medium and/or transferring the service data from the at least one service provider.

2. The method according to claim 1, wherein detecting services provided by the at least one storage medium comprises reading and evaluating service identification data stored on each of the storage media indicating the services available from the at least one storage medium.

3. The method according to claim 2, wherein the service identification data is in a data format allowing to determine executable code modules stored on the storage medium for providing a service and/or for determining service data stored on the storage medium for providing a service.

4. The method according to one of claims 1 to 3, further comprising the step of storing the service data transferred from the at least one service provider on at least one storage medium accessible by the entertainment and information processing device.

5. The method according to one of claims 1 to 4, wherein generating a list of available services comprises checking if the user is authorized to use the service.

6. The method according to one of claims 1 to 5, further comprising the step of changing the subscription status of available services.

7. The method according to claim 6, wherein changing the subscription status comprises enabling and/or disabling one or more services.

8. The method according to one of claims 1 to 7, further comprising the step of updating the service data stored on the at least one storage medium by transferring update information from the at least one service provider to the entertainment and information processing device and storing the update information on the at least one storage medium.

9. The method according to claim 8, further comprising the step of updating the service identification data.

10. The method according to one of claims 1 to 9, wherein detecting services provided by at least one a service provider comprises
opening a connection to the at least one service provider using the wireless data channel,
performing an authentication and/or authorization process at the at least one service provider to authenticate the user and/or authorize service access to the user, and
transferring service information for the services available from the at least one service provider to the user, in case the user has been authenticated and/or has authorization to use the service.

11. The method according to claim 10, wherein the authentication process is performed based on an unique identifier identifying the user and the authorization process is performed based on the subscription status of the user for the available services.

12. The method according to one of claims 1 to 11, wherein the services provided to the user comprise at least one of the following services:
navigation, time synchronization, configuration of automated WAP-calls, messaging, configuration data update, text-to-speech, audio track information and reproduction, play list generation, point of interest, firmware update, address book management, date book management, subscription status management, administration services of the at least one storage medium, and scripting services.

13. The method according to claim 12, wherein the messaging service comprises an email service, a SMS service and/or an instant messaging service.

14. The method according to one of claims 2 to 13, wherein the wireless data link is a GSM, GPRS, Bluetooth or WAN link.

15. The method according to one of claims 1 to 14, wherein the storage medium is a multimedia card, a hard disk, a programmable memory or a re-writable compact disk.

16. A system comprising a vehicle entertainment and information processing device (101), at least one storage medium (102, 103, 104) accessible by the entertainment and information processing device (101) and at least one service provider (105, 106, 107) accessible by the entertainment and information processing device (101) via a wireless data link,
wherein the vehicle entertainment and information processing device (101), the at least one storage medium (102, 103, 104) and the at least one service provider (105, 106, 107) are adapted to perform the method according to one of claims 1 to 15.

17. A vehicle entertainment and information processing device (101) in a system comprising the vehicle entertainment and information processing device (101), at least one storage medium (102, 103, 104) accessible by the entertainment and information processing device (101) and at least one service provider (105, 106, 107) accessible by the entertainment and information processing device (101) via a wireless data link, the device comprising:
service detection means (113) for
detecting at least one readable and writable storage medium (102, 103, 104) accessible by the entertainment and information processing device (101),
detecting services provided by the at least one storage medium (102, 103, 104), and
detecting services provided by at least one a service provider (105, 106, 107) via a wireless data channel,
processing means (111) for
generating a list of services available at the at least one storage medium (102, 103, 104) and the at least one service provider (105, 106, 107), and
providing the selected service to the user,
wherein the processing means are adapted to read service data from the at least one storage medium (102, 103, 104) and/or transferring the service data from the at least one service provider (105, 106, 107),
a display (114) for displaying the list of available services to the user using a browser interface, wherein the browser interface allows a selection of services available from the at least one storage medium (102, 103, 104) and the service provider (105, 106, 107), and
input means (115) for enabling the user to select a service from the list of available services.

18. The vehicle entertainment and information processing device (101) according to claim 16, further comprising means for performing the method according to one of claims 1 to 15.

19. The vehicle entertainment and information processing device according to claim 17 or 18, wherein the vehicle entertainment and information processing device (101) comprises a radio module (117) for establishing the wireless data link to the at least one service provider (105, 106, 107).

20. A data structure on a storage medium for use in a system comprising a vehicle entertainment and information processing device, at least one storage medium accessible by the entertainment and information processing device and at least one service provider accessible by the entertainment and information processing device via a wireless data link, the data structure comprising:
at least one executable code module,
service data for providing at least one service, and
service identification data,
wherein the service identification data are in structure enabling the vehicle entertainment and information processing device to determine the at least one executable code module stored on the storage medium for providing a service and/or to determine service data stored on the storage medium for providing a service when reading the service identification data.

21. The data structure according to claim 20, wherein the service information data and/or the service data is in a markup language format or a proprietary format.
